# EUROPÄISCHE PATENTSCHRIFT

(11) **EP 2 917 601 B1**
(45) Veröffentlichungstag und Bekanntmachung des Hinweises auf die Patenterteilung: **12.12.2018**
(21) Anmeldenummer: 13786154.8
(22) Anmeldetag: 08.10.2013
(51) Int. Cl.: F16D 21/06, F16D 25/08

(54) **DOPPELKUPPLUNG MIT EINER KUPPLUNGSBETÄTIGUNGSEINRICHTUNG**
DOUBLE CLUTCH WITH CLUTCH-ACTUATING DEVICE
EMBRAYAGE DOUBLE AVEC UN DISPOSITIF D'ACTIONNEMENT D'EMBRAYAGE

(30) Priorität: 07.11.2012 DE 102012220271
(43) Veröffentlichungstag der Anmeldung: 16.09.2015
(73) Patentinhaber: Schaeffler Technologies AG & Co. KG, 91074 Herzogenaurach (DE)
(72) Erfinder: WERNER, Olaf, 77815 Bühl (DE); BOSNJAK, Daniel, F-67470 Seltz (FR); KRAHTOV, Luben, 76530 Baden-Baden (DE)
(86) Internationale Anmeldenummer: PCT/DE2013/200206
(87) Internationale Veröffentlichungsnummer: WO 2014/071929

(56) Entgegenhaltungen:
- EP-A1- 1 555 452
- WO-A1-2005/045271
- DE-A1-102011 086 841
- GB-A- 1 255 002
- GB-A- 2 051 291

## Beschreibung

Die Erfindung betrifft eine Doppelkupplung mit einer Kupplungsbetätigungseinrichtung, die einen Hydraulikzylinder mit einem Gehäuse aufweist, das konzentrisch um eine Welle angeordnet ist und einen ringförmigen Druckraum aufweist, in dem pro Kupplung mindestens zwei Kolben beweglich gelagert sind, wobei die mindestens zwei Kolben, die einer Kupplung zugeordnet sind, über einen Lagerring mit einem Ausrücklager der jeweiligen Kupplung verbunden sind. Eine derartige Doppelkupplung ist z.B. aus EP1 555 452 A1 bekannt.

In Kraftfahrzeugen werden Kupplungsbetätigungseinrichtungen eingesetzt, um den Kraftschluss zwischen einem Motor und einem Getriebe zu trennen bzw. herzustellen. Dabei wird ein als Hydraulikzylinder ausgebildeter Nehmerzylinder in einer hydraulischen Kupplungsbetätigungseinrichtung in Richtung eines Ausrückelementes, beispielsweise einer Kupplungsscheibe, bewegt, wodurch die Kupplung geschlossen wird. Für den Einsatz in einem Mehrkolbenausrücker besteht der Hydraulikzylinder aus einem Gehäuse, das konzentrisch um eine Welle angeordnet ist. Das Gehäuse weist einen ringförmigen Druckraum auf, in dem konzentrisch mindestens zwei Kolben beweglich gelagert sind. Die Kolben sind dabei über einen Lagerring mit einem Ausrücklager verbunden, welches mit der Kupplung in Kontakt steht. Da die Kolben des Hydraulikzylinders starr an dem Lagerring des Ausrücklagers befestigt sind, ist nur eine simultane Bewegung der mindestens zwei Kolben möglich. Bei einer Taumelbewegung, welche beispielsweise durch einen Schlag der Kupplung hervorgerufen werden kann, kann das Ausrücklager dieser Taumelbewegung nicht folgen, da es auf dem Lagerring starr aufsitzt. Dies hat zur Folge, dass in der Kupplung Momentenmodulationen in Form eines Rupfens auftreten.

Die GB 1 255 002 A beschreibt hierfür den Einsatz von elastischem Material zwischen Kolben und Ausrücklager, damit eine Schwenkbewegung beider Bauteile zueinander möglich ist.

Der Erfindung liegt somit die Aufgabe zugrunde, einen Hydraulikzylinder für eine Doppelkupplung anzugeben, welcher eine Taumelbewegung der Kupplung ausgleichen kann.

Erfindungsgemäß ist die Aufgabe dadurch gelöst, dass der Lagerring des Ausrücklagers kippfähig auf den Kolben aufliegt. Durch die kippfähige Gestaltung nehmen die Kolben die Taumelbewegung der Kupplung, die über das Ausrücklager und den Lagerring übertragen wird, auf und können diese ausgleichen. Dies ist möglich, da die Kolben ohne eine feste mechanische Verbindung an dem Ausrücklager anliegen. Der Lagerring wird durch eine Vorlast auf die Kolben gedrückt. Diese Vorlast gewährleistet, dass die gelenkähnliche Verbindung zwischen Lagerring und Kolben immer bestehen bleibt und keine zusätzlichen Bauelemente notwendig sind, um diese gelenkähnliche Verbindung zu fixieren. Die vorlast ist durch die Kupplung aufgebracht.

Die Vorlast ist durch die Kupplung aufgebracht. Dadurch entfallen zusätzliche Bauteile, um die Vorlast zu gewährleisten.

Vorteilhafterweise bildet jeder Kolben mit dem fest mit dem Ausrücklager verbundenen Lagerring eine gelenkähnliche Verbindung. Diese gelenkähnliche Verbindung erlaubt eine flexible Bewegung des Ausrücklagers gegenüber dem Kolben, so dass die übertragenen Taumelbewegungen problemlos ausgeglichen werden können.

In einer Ausgestaltung weist die gelenkähnliche Verbindung mindestens zwei Freiheitsgrade auf. Dies gewährleistet, dass Bewegungen in jedwede Richtung zuverlässig ausgeglichen werden können.

In einer Variante greift der Kolben zur Bildung der gelenkähnlichen Verbindung in eine Ausnehmung des Lagerrings ein. Durch dieses Eingreifen wird sichergestellt, dass der Lagerring kippfähig auf den Kolben geführt wird, wobei eine Verschiebung des Kolbens zum Lagerring allerdings unterbunden wird.

In einer Weiterbildung ist das in die Ausnehmung des Lagerrings eingreifende Ende des Kolbens als kuppenförmige Auflage ausgebildet. Diese kuppenförmige Auflage gewährleistet, dass der Lagerring um die Längsachse des Kolbens frei und ungehindert kippen kann.

Vorteilhafterweise ist die Ausnehmung des Lagerringes der Form der kuppenförmigen Auflage angepasst. Durch diese Anpassung der Ausnehmung an die Form der kuppenförmigen Auflage wird eine formschlüssige Verbindung zwischen der kuppenförmigen Auflage und der Ausnehmung erreicht und die Kippfähigkeit des Lagerrings auf der kuppenförmigen Auflage sicherstellt.

Die Erfindung lässt zahlreiche Ausführungsformen zu. Eine davon soll anhand der in der Zeichnung dargestellten Figuren näher erläutert werden.

Es zeigt:
- Figur 1:: ein erster Längsschnitt durch einen Hydraulikzylinder für ein Doppelkupplungssystem
- Figur 2:: ein zweiter um 90° gedrehter Längsschnitt durch den Hydraulikzylinder gemäß Figur 1
- Figur 3:: Querschnitt durch den Druckraum des Hydraulikzylinders
- Figur 4:: Prinzipdarstellung der Verkippung eines Lageringes in einem ersten Freiheitsgrad
- Figur 5:: Prinzipdarstellung der Verkippung des Lagerringes gemäß Figur 4 in einem zweiten Freiheitsgrad

Gleiche Merkmale sind mit gleichen Bezugszeichen gekennzeichnet.

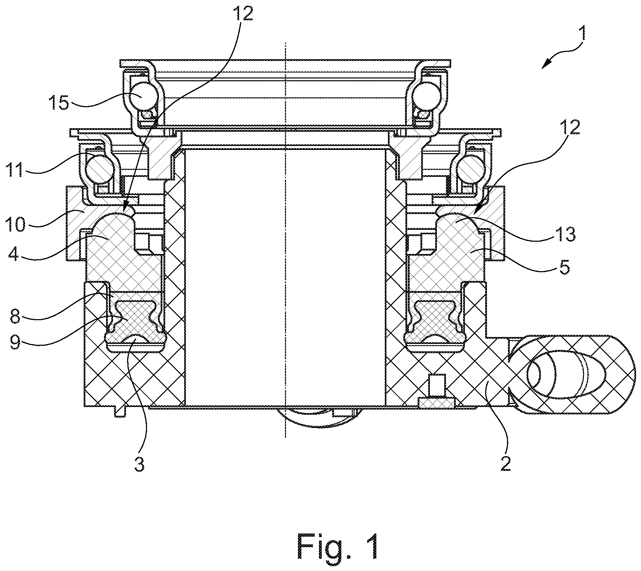

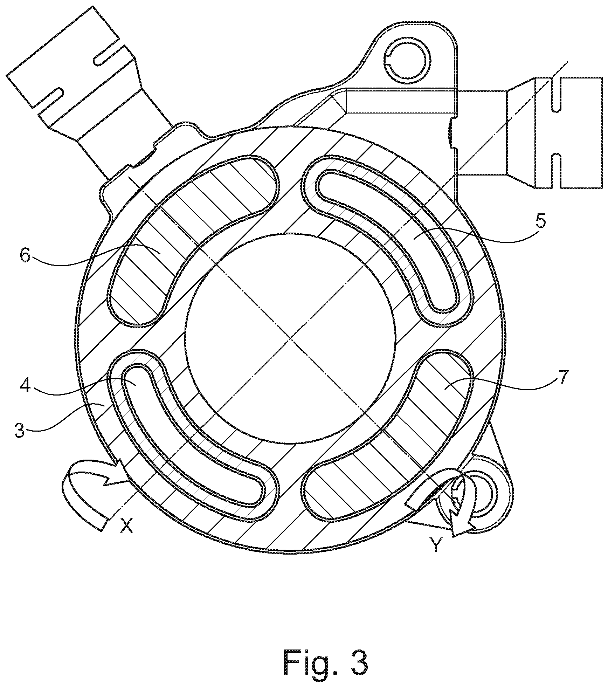

Figur 1 zeigt einen Hydraulikzylinder 1, welcher als Nehmerzylinder in einer Kupplungsbetätigungseinrichtung eines Kraftfahrzeuges Anwendung findet und dabei zum Betreiben von Doppelkupplungen genutzt wird. Der Hydraulikzylinder 1 besteht aus einem Gehäuse 2, in welchem sich ein ringförmig ausgebildeter Druckraum 3 erstreckt, in dem vier nierenähnlich ausgebildete Kolben 4, 5, 6, 7 (Figur 3) unabhängig voneinander beweglich gelagert sind. Jeder Kolben 4, 5, 6, 7 weist dabei in Richtung des Druckraumes 3 einen Dichtungsträger 8 auf, auf welchem eine Dichtung 9 angeordnet ist. Das Gehäuse 2 umgibt eine nicht weiter dargestellte Getriebewelle.

An die sich gegenüber liegenden Kolben 4 und 5 schließt sich ein erster Lagerring 10 an, auf welchem ein erstes Ausrücklager 11 fest positioniert ist. Das Ausrücklager 11 ist mit einer nicht weiter dargestellten ersten Kupplung verbunden. Der Lagerring 10 weist dabei eine umlaufende Ausnehmung 12 auf, in welcher das Ende des jeweiligen Kolbens 4 und 5 gelagert ist. Das Ende des Kolbens 4 oder 5 ist dabei vorzugsweise kalottenähnlich, also als kuppenförmige Auflage, ausgebildet. Mittels dieser kuppenförmigen Auflage 13 ist der Kolben 4, 5 frei kippfähig in dem Lagerring 10 bzw. dessen Ausnehmung 12 gelagert.

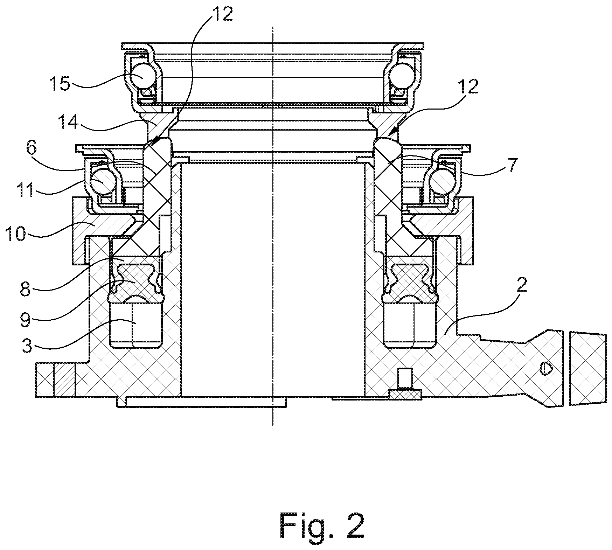

Figur 2 zeigt einen Längsschnitt durch den Hydraulikzylinder 1, in einer um 90° zur Figur 1 gedrehten Position. Dabei sind die beiden sich gegenüberliegenden Kolben 6, 7 sichtbar, die an einen zweiten Lagerring 14 anliegen, der ein zweites Ausrücklager 15 trägt, wobei das zweite Ausrücklager 15 eine zweite, nicht weiter dargestellte Kupplung betätigt.

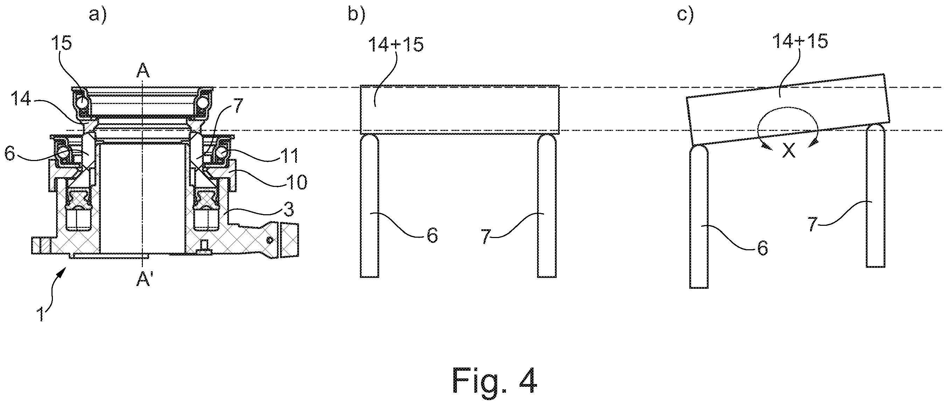

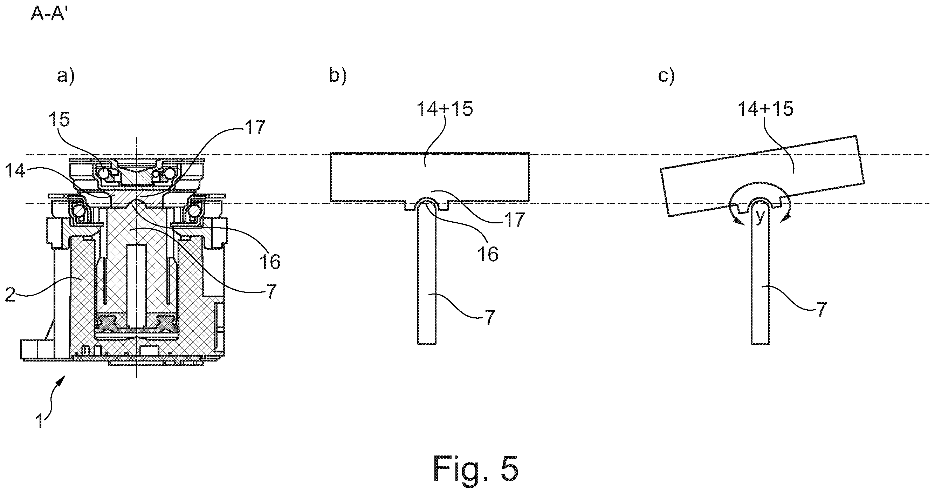

Wie aus Figur 3 ersichtlich, können dabei die durch die Kolben 4, 5 bzw. die Kolben 6, 7 gebildeten gelenkähnlichen Verbindungen zwischen Kolben 4, 5; 6, 7 und Lagerring 10; 14 um zwei Freiheitsgrade gekippt werden. Diese Kippbewegungen sollen anhand der Gelenkverbindung der Kolben 6, 7 mit dem zweiten Lagerring 14 und dem Ausrücklager 15 in Figur 4 und 5 näher erläutert werden. Figur 4a zeigt dabei eine Darstellung des Hydraulikzylinders 1, die der in Figur 2 entspricht. Wie daraus hervorgeht, liegt der Lagerring 14 frei auf den Kolben 6, 7 auf, wobei der Lagerring 14 fest mit dem Ausrücklager 15 verbunden ist. Dieses freie Anliegen ist noch einmal in Figur 4b schematisch dargestellt. Wird nun von der Kupplung eine Bewegung auf das Ausrücklager 15 und somit auf den Lagerring 14 übertragen, so ist aufgrund der Taumelbewegung des Ausrücklagers 15 und somit auch des Lagerringes 14 eine unabhängige Bewegung beider Kolben 6, 7 entlang deren Einrückrichtung in den Druckraum 3 je nach angreifenden Kräften möglich (Figur 4c). Dies ist insbesondere deshalb möglich, da der Lagerring 14 nur auf den Kolben 6, 7 frei aufliegt und lediglich durch eine Vorlast, welche durch die nicht weiter dargestellte zweite Kupplung auf das Ausrücklager 15 aufgebracht wird, unverschiebbar in seiner Position gehalten wird.

Figur 5 verdeutlicht einen zweiten Freiheitsgrad des Hydraulikzylinders 1, wobei Figur 5a einen Schnitt der Figur 4a in A-A'-Richtung darstellt. Dabei wird im Weiteren insbesondere der Kolben 7 betrachtet. Der Kolben 7 greift mit seiner kuppenförmigen Auflage 16 in eine Ausnehmung 17 des Lagerringes 14 ein, wie es in Figur 5b schematisch dargestellt ist. Tritt nun aufgrund der Taumelbewegung eine weitere Kraft in eine zweite Bewegungsrichtung des Lagerrings 14 auf, so wird der Lagerring 14 auf der kuppenähnlichen Ausbildung 16 des Kolbens 7 beliebig verkippt (Figur 5c). Auch dieser Freiheitsgrad wird dadurch gewährleistet, dass die Kolben 6, 7 frei an dem Lagerring 14 anliegen.

Die im Zusammenhang mit Figur 4 und 5 erläuterten Kippbewegungen des Lagerringes 14 und somit des Ausrücklagers 15 gelten in vergleichbarer Weise auch für die Kolben 4 und 5 im Zusammenhang mit dem Lagerring 10 und dem Ausrücklager 11. Durch die entsprechende Gestaltung der Kolbenenden und der Lagerringe 10, 14 werden gelenkähnliche Verbindungen zwischen den Kolben 6 und 7 und dem Lagerring 14 sowie den Kolben 4 und 5 und dem Lagerring 10 gebildet. Dabei wird eine verschiebliche Bewegung der Lagerringe 10, 14 nicht zugelassen, sondern lediglich gewährleistet, dass der Lagerring 10, 14 in alle Richtungen gekippt werden kann.

Durch diesen Ausgleich der Taumelbewegung kann die Lebensdauer des Hydraulikzylinders 1 gesteigert und eine Rupfproblematik an der Kupplung vermieden werden. Voraussetzung hierfür sind zwei unabhängige Kolben für ein Ausrücklager. Aufgrund der vorgeschlagenen Lösung kann auf eine zusätzliche Ausgleichseinrichtung zwischen dem Lagerring 10, 14 und dem Ausrücklager 11, 15 verzichtet und somit die Bauhöhe des Hydraulikzylinders 1 minimiert werden.

### Bezugszeichenliste

- 1: Hydraulikzylinder
- 2: Gehäuse
- 3: Druckraum
- 4: Kolben
- 5: Kolben
- 6: Kolben
- 7: Kolben
- 8: Dichtungsträger
- 9: Dichtung
- 10: Erster Lagerring
- 11: Erstes Ausrücklager
- 12: Ausnehmung
- 13: Kuppenförmige Auflage
- 14: Zweiter Lagerring
- 15: Zweites Ausrücklager
- 16: Kuppenförmige Auflage
- 17: Ausnehmung

## Patentansprüche

1. Doppelkupplung mit einer Kupplungsbetätigungseinrichtung, die einen Hydraulikzylinder mit einem Gehäuse (2) aufweist, das konzentrisch um eine Welle angeordnet ist und einen ringförmigen Druckraum (3) aufweist, in dem pro Kupplung mindestens zwei Kolben (4, 5; 6, 7) beweglich gelagert sind, wobei die mindestens zwei Kolben (4,5; 6,7), die einer Kupplung zugeordnet sind, über einen Lagerring (10; 14) mit einem Ausrücklager (11; 15) der jeweiligen Kupplung verbunden sind, **dadurch gekennzeichnet, dass** der Lagerring (10; 14) des Ausrücklagers (11, 15) jeweils kippfähig auf den Kolben aufliegt und durch eine durch die jeweilige Kupplung der Doppelkupplung aufgebrachte Vorlast auf die Kolben (4, 5; 6, 7) gedrückt wird.

2. Doppelkupplung nach Anspruch 1, **dadurch gekennzeichnet, dass** jeder Kolben (4, 5; 6, 7) mit dem fest mit dem Ausrücklager (11; 15) verbundenen Lagerring (10; 14) eine gelenkähnliche Verbindung bildet.

3. Doppelkupplung nach Anspruch 1 oder 2, **dadurch gekennzeichnet, dass** die gelenkähnliche Verbindung mindestens zwei Freiheitsgrade aufweist.

4. Doppelkupplung nach Anspruch 2 oder 3, **dadurch gekennzeichnet, dass** der Kolben (4, 5; 6, 7) zur Bildung der gelenkähnlichen Verbindung in eine Ausnehmung (12; 17) des Lagerrings eingreift.

5. Doppelkupplung nach Anspruch 4, **dadurch gekennzeichnet, dass** das in die Ausnehmung (12; 17) des Lagerrings (10; 14) eingreifende Ende des Kolbens (4, 5; 6, 7) als kuppenförmige Auflage (13; 16) ausgebildet ist.

6. Doppelkupplung nach Anspruch 4 oder 5, **dadurch gekennzeichnet, dass** die Ausnehmung (12; 17) des Lagerrings (10; 14) der Form der kuppenförmigen Auflage (13, 16) angepasst ist.

## Claims

1. Double clutch having a clutch actuating device which has a hydraulic cylinder with a housing (2) which is arranged concentrically about a shaft and has an annular pressure space (3), in which at least two pistons (4, 5; 6, 7) are arranged movably per clutch, the at least two pistons (4, 5; 6, 7) which are assigned to one clutch being connected via a bearing ring (10; 14) to a release bearing (11; 15) of the respective clutch, **characterized in that** the bearing ring (10; 14) of the release bearing (11, 15) lies on the piston in each case such that it can be tilted, and is pressed onto the pistons (4, 5; 6, 7) by way of a preload which is applied by way of the respective clutch of the double clutch.

2. Double clutch according to Claim 1, **characterized in that** each piston (4, 5; 6, 7) forms a joint-like connection with the bearing ring (10; 14) which is connected fixedly to the release bearing (11; 15).

3. Double clutch according to Claim 1 or 2, **characterized in that** the joint-like connection has at least two degrees of freedom.

4. Double clutch according to Claim 2 or 3, **characterized in that** the piston (4, 5; 6, 7) engages into a recess (12; 17) of the bearing ring in order to form the joint-like connection.

5. Double clutch according to Claim 4, **characterized in that** that end of the piston (4, 5; 6, 7) which engages into the recess (12; 17) of the bearing ring (10; 14) is configured as a dome-shaped support (13; 16).

6. Double clutch according to Claim 4 or 5, **characterized in that** the recess (12; 17) of the bearing ring (10; 14) is adapted to the shape of the dome-shaped support (13, 16).

## Revendications

1. Double embrayage comprenant un dispositif d'actionnement d'embrayage qui présente un vérin hydraulique avec un boîtier (2) qui est disposé concentriquement autour d'un arbre et qui présente un espace de pression annulaire (3) dans lequel, pour chaque embrayage, au moins deux pistons (4, 5 ; 6, 7) sont supportés de manière déplaçable, les au moins deux pistons (4, 5 ; 6, 7), qui sont associés à un embrayage, étant connectés par le biais d'une bague de palier (10 ; 14) à un palier de débrayage (11 ; 15) de l'embrayage respectif, **caractérisé en ce que** la bague de palier (10 ; 14) du palier de débrayage (11, 15) repose sur le piston à chaque fois de manière à pouvoir basculer et est pressée sur les pistons (4, 5 ; 6, 7) par une précontrainte appliquée par l'embrayage respectif du double embrayage.

2. Double embrayage selon la revendication 1, **caractérisé en ce que** chaque piston (4, 5 ; 6, 7) forme avec la bague de palier (10 ; 14) connectée fixement au palier de débrayage (11 ; 15) une connexion de type articulation.

3. Double embrayage selon la revendication 1 ou 2, **caractérisé en ce que** la connexion de type articulation présente au moins deux degrés de liberté.

4. Double embrayage selon la revendication 2 ou 3, **caractérisé en ce que** le piston (4, 5 ; 6, 7) s'engage dans un évidement (12 ; 17) de la bague de palier pour former la connexion de type articulation.

5. Double embrayage selon la revendication 4, **caractérisé en ce que** l'extrémité du piston (4, 5 ; 6, 7) s'engageant dans l'évidement (12 ; 17) de la bague de palier (10 ; 14) est réalisée sous forme d'appui en forme de dôme (13 ; 16).

6. Double embrayage selon la revendication 4 ou 5, **caractérisé en ce que** l'évidement (12 ; 17) de la bague de palier (10 ; 14) est adapté à la forme de l'appui en forme de dôme (13, 16).
